Europäisches Patentamt

(19) **European Patent Office**

**Office européen des brevets**

(11) Publication number: **0 286 616**
**A2**

## (12) EUROPEAN PATENT APPLICATION

(21) Application number: **88850117.8**

(51) Int. Cl.⁴: **C 05 F 3/06**

(22) Date of filing: **08.04.88**

(30) Priority: **10.04.87 DK 1883/87**

(43) Date of publication of application:
**12.10.88 Bulletin 88/41**

(84) Designated Contracting States:
**AT BE CH DE ES FR GB GR IT LI LU NL SE**

(71) Applicant: **DANISH OIL PROCESSING COOPERATION A/S**
**Thorsgade 4 Hvam**
**DK-9620 Aalestrup (DK)**

(72) Inventor: **Brams, Sören**
**Skovtoften 8 Hvam**
**DK-9620 Aalestrup (DK)**

(74) Representative: **Lenz, Franz et al**
**AWAPATENT AB Box 5117**
**S-200 71 Malmö (SE)**

(54) **Method for the processing of liquid manure and similar slurry materials, and apparatus for the exucution of the method.**

(57) Method for processing of liquid manure and similar slurry materials with contents of organic materials and nitrogenous chemical substances. The method leads to the separation of the slurry material into a solid-matter phase and a dry-stuff phase, which together contain the nitrogenous components. Both material phases are sterile. The liquid phase can be evaporated, and the water recovered from this process can be used for feeding purposes, while the concentrate can be combined and used together with the solid-matter phase as fertilizer. There is also described an apparatus with a separation tank (3) for the execution of the method. The separation tank (3) has a discharge opening (105) for the liquid phase, a heating surface (106) connected to a heat source (107) for the heating of the pre-treated liquid manure, a solid-matter removal element (110, 112) and a liquid manure introduction element (118). Additionally, it can have a liquid manure pre-heating heat exchanger (108), liquid manure sieves (109), liquid manure level control (111), liquid manure temperature control (119) and a solid-matter draining element (114), which ensure continuous operation.

The method and apparatus make it possible to process liquid manure and similar materials in an inexpensive manner, turning them into materials which can be handled and used within the limits as defined in stringent environmental regulations.

Fig. 2

EP 0 286 616 A2

## Description

## METHOD FOR THE PROCESSING OF LIQUID MANURE AND SIMILAR SLURRY MATERIALS, AND APPARATUS FOR THE EXECUTION OF THE METHOD.

This invention is a new method for the processing of liquid manure and the like, mainly in organic slurry materials, for the recovery of material with such a high content of dry matter that fluid does not seep from this material when it is stored in a heap under cover, and a liquid phase which is sterile. The invention also relates to apparatus for the execution of the method.

The steadily more stringent environmental requirements give rise to demands concerning new methods by which one can process agricultural waste products in a financially feasible manner, so that these products can be handled and converted while maintaining the environmental regulations. A particularly pressing problem is the processing of the waste products from herds of cattle in the form of liquid manure and similar materials, the disposal and conversion of which is a big present-day problem.

Therefore, the object of the invention is to present a method for the processing of slurry-like materials with a considerable content of organic material, for example liquid manure, in that the method shall result in one or more materials which can be stored and/or disposed of at minimum cost while still maintaining the environmental regulations. The invention shall also present means for the execution of the method.

The object is achieved according to the invention with a method of the kind presented in the preamble. The method is characteristic in that one ad justs the acidity of the slurry-like material so that it does not give off ammonia in vapour form when it is heated to around 100°C, and that one heats the slurry-like material to at least 75°C, whereby it is made sterile and is separated into a clear liquid phase and relatively liquid-free slurry layer, and that one thereafter separates the two slurry phases in such a manner that they can be processed individually. According to the invention, this method can be expediently executed with apparatus which is characteristic in that it comprises a slurry separation tank with one or more inlets for slurry in the upper area of the tank, a slurry level control element for maintaining a mainly constant slurry level in the tank, a liquid removal opening in the lower area of the tank, a heating surface in the tank installed in an area below the normal surface level of the slurry, and a removal element for the collection of the slurry phase containing the dry matter from the slurry surface area, and the removal of this material from the tank.

The advantage of the method according to the invention is that the liquid manure is separated into two products which can be handled individually in a financially feasible manner and within the conditions of the environmental regulations. The dry-matter phase fills far less than the liquid manure. It can be stored in a simple manner under cover without the exudation of any liquid phase which is detrimental to the environment, and it can be transferred without health risks to other property, and at a suitable time can be brought out to the fields as fertilizer. Also, the liquid phase is sterile, and like the dry-stuff phase it can be delivered to another property without any risk to health. The liquid phase can be pumped and sprayed out without any technical problems. Because of the regulation of the acidity of the materials, the contents of ammonia are not given off to the atmosphere during storage and the application to the fields. Therefore, when applied to the fields, the contents of ammonia enter into the manurial value with approximately the whole of its original amount. At the same time, the regulation of the acidity brings about a change in the smell of the materials, whereby its unpleasant nature and strength is considerably reduced. Finally, the liquid phase is suitable for evaporation during the production of water which can be used in animal husbandry, and a dry-stuff phase which can be mixed with and handled like the dry-stuff phase recovered by means of the separation process.

Advantageous embodiments of the method according to the invention are presented in the claims 2 to 4.

The advantage of regulating the acidity by means of an acid-forming bacterial culture instead of by the addition of acids is primarily the savings in operational costs for the purchase of acids. In practice it has proved that in order to avoid an unacceptable evaporation of ammonia, the pH of the slurry (the liquid manure) must not be higher than 7. On the other hand, if the pH-value is too low, problems arise with corrosion in the processing plant. An acidity of around 6 has shown itself to be highly applicable in practice, particularly in connection with biologically-promoted acid formations, which can produce this pH-value in a reasonably short time. Heating to at least 75°C and a maximum of 100°C enables a sufficiently effective sterilization of the processed material without the use of over-pressure, and a temperature of around 90°C has proved to result simultaneously in a quick sterilization and a correspondingly quick separation of the liquid manure into the two phases.

The apparatus according to the invention is advantageous because it is simple in its construction and suitable for reliable and continuous operation with only periodic supervision. With a pre-treatment container for the biological treatment of the liquid manure, it is possible to avoid running costs for the purchase of acids. It is expedient that the element which removes the dry-stuff phase from the slurry separation tank, can at the same time drain this material for the liquid phase, so that this draining-off as a separate finishing treatment is avoided. During experiments carried out by the inventor, the construction described in claim 7 has proved to function safely without operational stoppages. If the slurry material which is introduced into the slurry separation tank is spread out evenly over the slurry surface, it has proved that the liquid manure can be separated into the two phases without any problems. The embodiment of the apparatus according to the invention as described in claim 10 is of advantage for reasons of its compact construction, which results in a relatively small loss of heat, and which because only few connections and pipe joints need to be established at the site of erection, enables installation costs to be held as low as possible.

If the apparatus according to the invention also comprises a liquid evaporation unit, one achieves the advantage that most of the water in the liquid phase can be recovered in a form which can be used for feeding purposes within animal husbandry, and can thus be recirculated in the agricultural operations. With the evaporation of the liquid phase, the disposal of waste is reduced to include only one material which is a sterile material with high manurial value and a relatively limited volume, whereby it can much better tolerate being transported than unprocessed liquid manure, and can even have a positive commercial value.

The invention is illustrated further below by means of a detailed description of some preferred embodiments of the apparatus according to the invention, in that reference is made to the drawing, in which:

Fig. 1 is a schematic, vertical section through an apparatus according to the invention, illustrating the processing of liquid manure with the method according to the invention,

Fig. 2 is a schematic, vertical section through a separation tank in the apparatus according to the invention for the phase separation of liquid manure, and

Fig. 3 is a schematic, vertical section along the line III-III in figure 2.

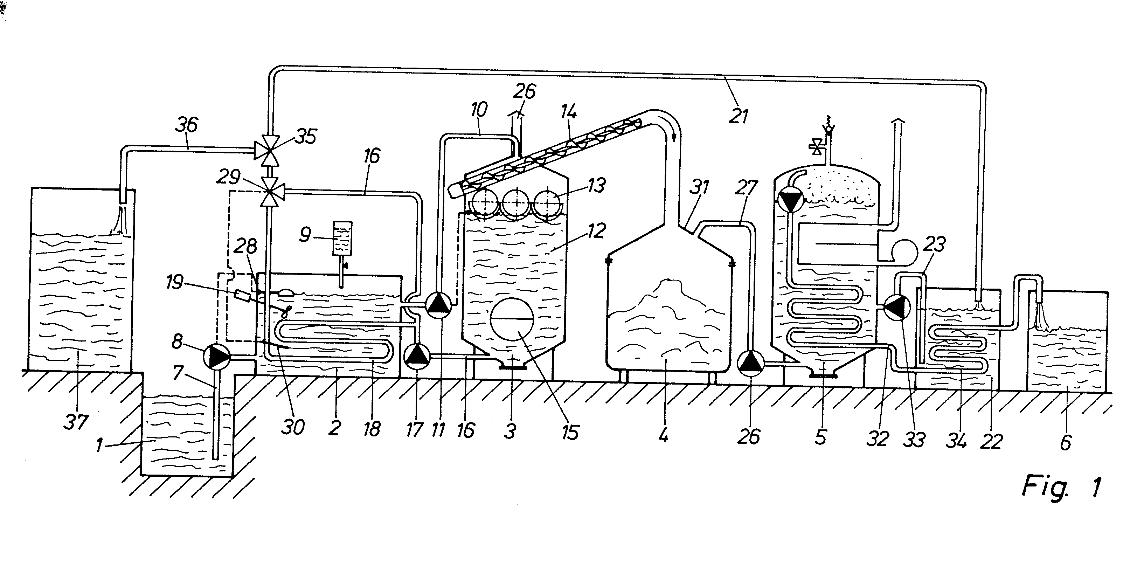

The liquid manure processing plant according to fig. 1 comprises a first liquid manure container 1, a pre-treatment container 2, a liquid manure separation tank 3, a fertilizer tank 4, an evaporation unit 5, a water tank 6 and a second liquid manure storage tank 22. The first liquid manure container 1 has a first liquid manure pipe 7, in which there is inserted a first liquid manure pump 8 connected with the pre-treatment container 2. The first liquid manure pump 8 is controlled by a first float switch 28, this being built into the pre-treatment container 2, and being arranged to hold the liquid manure at a constant level in the pre-treatment container 2. In said pre-treatment container there is also a heating surface 18 which can be heated with the manure liquid phase from the separation tank 3, in that the temperature is held constant at an adjustable temperature by means of a thermostat 30 which controls a three-way valve 29. In the pre-treatment container 2 there is a mechanical stirrer 19 which can effect a slow stirring of the liquid manure in the container 2. Finally, above the container 2 there is provided a container 9 from which an acid introduction pipe leads down into the container 2. A second liquid manure pipe 10 with a second liquid manure pump 11 leads from the pre-treatment container 2 to the upper area above the surface of the liquid manure in the separation tank 3, where the second liquid manure pipe 10 opens out into a liquid manure spreading element which can distribute same over the surface of the liquid manure. In the top of the separation tank 3 there is provided a dry-stuff phase removal element 13, 14, a liquid manure level regulating element, a liquid phase area, a heating surface 15 and a third liquid manure pipe 16, and in the top there is provided a second float switch which controls the second liquid manure pump 11. The separation tank 3 is described in more detail below. The third liquid manure pipe 16 has a third liquid manure pump 17 inserted, and leads alternatively to the heating surface 18 in the pre-treatment container 2 or via a pipe branch to the three-way valve 29. The third pump 17 is preferably a displacement pump capable of pumping at a constant, adjustable pump speed. The dry-stuff phase removal element 13, 14 leads to the fertilizer tank 4, which is in the form of a transportable container disposed under a tight cover 31, the lower edge of which is designed with a contact surface which can rest on the upper edge of the container 4. A pipe 27 opens out under the cover 31, said pipe 27 being connected via a pump 26 to an extraction opening in the evaporation unit 5, which is preferably an evaporation boiler with heating surface uppermost in the liquid volume, and having a steam dome over the liquid surface from which a steam pipe with compressor leads the steam from the steam dome to a condenser disposed below the heating surface, so that the steam condenses and radiates heat to the bottom area.

From the condenser of the evaporation unit 5, a water pipe 32 leads via the second liquid manure container 22 to a water tank 6. In the second liquid manure container 22, the pipe 32 is provided with a heat exchanger surface 34. From the three-way valve 29, a fourth liquid manure pipe 21 leads to the second liquid manure container 22, from which a fifth liquid manure pipe 23 with a fourth liquid manure pump 33 leads to the evaporation unit 5. Finally, in the fourth liquid manure pipe 21 between the three-way valve 29 and the second liquid manure container 22, there is inserted a second three-way valve 35, from which a seventh liquid manure pipe 36 is led to a third liquid manure container 37. Out of regard for clarity, the heat insulation of pipes and containers is not shown in the schematic figures 1 - 3.

In the plant as shown in figure 1, the following method according to the invention is used for the processing of the liquid manure.

From the first liquid manure container 1, which in practice can be arranged to contain sufficient for a few days to about a week's production, the liquid manure is pumped via the pump 8 through the first liquid manure pipe 7 to the pre-treatment container 2. The amount pumped is regulated by the first float switch 28 in the pre-treatment container 2. The pre-treatment container 2 is arranged for the regulation of the acidity of the liquid manure by means of an acid-forming microbiological culture. Its smallest size is thus dependent on the choice of operating temperature. If, for example, this is 20 - 25°C, the pre-treatment container must be capable of containing the average production of liquid manure for at least 24 hours, whereby the average time for which it is held in the container enables a sufficient formation of acid. The time for which the liq uid manure remains in the pre-treatment container is an average time, in that the contents of the container are constantly stirred with the stirrer 19 in order to ensure an even and uniform acid production, which is best achieved with a constant and uniform temperature. The temperature is held at the desired level by means of the adjustable thermostat 28, which controls the three-way valve 29 in such a manner that a fall in the temperature of the liquid manure in the pre-treatment container 2 results in a changeover of the three-way valve 29 to that position in which the liquid from the separation tank 3 is led through the heat exchanger in the pre-treatment container 2, and from here to the second liquid manure container 22, so that the heating surface 18 radiates heat to the liquid manure. If the temperature exceeds the desired level, the three-way valve is changed so that the liquid from the separation tank 3 is led around the pre-treatment container 2 directly to the second liquid manure container 22. Independently of the position of the three-way valve 29, the third liquid manure pump 17 pumps the liquid manure from the separation tank 3 through the pipes 16 and 21 to the second liquid manure container 22 at a constant speed. This speed can be regulated during the daily inspection, depending on the level of the liquid manure in the first container 1. Should problems arise with the microbiological acid production, the acidity of the liquid manure can alternatively be be regulated in the pre-treatment container 2 by means of the addition of, for example, sulphuric acid from the acid introduction container 9.

The liquid manure, the acidity of which is adjusted to a maximum pH = 7, and advantageously to around 6, is pumped from the pre-treatment container 2 via the second liquid manure pump 11 through the second liquid manure pipe 10 to the separation tank 3, which is discussed in more detail below. After the phase separation in the separation tank 3, the dry-stuff phase of the liquid manure is removed from the separation tank 3 by means of the dry-stuff removal elements 13, 14, which drain the removed material of excess liquid phase and lead the drained material to the dry-stuff container 4. For reasons of the heat treatment in the separation tank 3, the fertilizer thus removed is sterile. Therefore, in the event of it being transported from the point of production to another property as a commercial fertilizer, there is no risk whatsoever of contamination. As described earlier, the separated liquid phase is removed from the separation tank 3 through the third liquid manure pipe 16, and led to the second liquid manure container 22.

The liquid manure in the second container 22 is heated and/or held at a high temperature by the condensation water which flows through the heat exchanger surface 34 on its way from the evaporator 5 to the water tank 6.

The liquid manure, which is sterile due to the heat treatment in the separation tank 3, is pumped from the second liquid manure container 22 via the fourth pump 33 through the fifth liquid manure pipe 23 to the evaporation unit 5, in which it is evaporated to a dry-stuff content of around 30% or slightly more, so that the concentrated liquid can be pumped portionwise by the fifth liquid manure pump 26 through the sixth liquid manure pipe 27 to the fertilizer container 4, and here combined with the liquid manure's dry-stuff phase. The evaporation unit 5 is preferably of the type described earlier in the application, and is therefore not described in more detail here. The water evaporated and recondensed in the evaporation unit is led through the water pipe 32 to the water tank 6, from where it can be pumped away for use as required. During trial operation by the inventor, the quality of the water has proved to be quite satisfactory for use for feeding purposes, and can thus be recirculated within the agricultural operations.

Out of regard for the explanation of the invention, fig. 1 shows a three-way valve 35 via which the liquid manure can be led through a seventh liquid manure pipe 36 to a third liquid manure container 37. From this storage tank, the sterile liquid can be collected for spraying as fertilizer on the fields. This possibility is to be understood in the way that a plant in practice will usually be built either with the possibility of evaporation of the liquid manure, or with the possibility of direct spraying of the sterile liquid. However, investment in both possibilities in one and the same plant can be considered under certain conditions.

As a result of the regulation of the acidity of the liquid manure before the further processing, at no stage in the process are practical amounts of ammonia given off by the liquid manure's dry-stuff phase or liquid phase. Therefore, the fertilizer produced contains the whole amount of the ammonia to be found in the starting material, and the fertilizing material produced has no tendency to give off ammonia during storage or spreading. This is contrary to the generally-known technique of storing and spreading of liquid manure, which normally results in an ammonia loss of around 30% or more. In addition, for reasons of the high degree of evaporation of water, the fertilizer produced is in concentrated form, and is thus better able to bear the transport costs which are connected with its bringing out to remotely lying fields.

The method according to the invention does not, however, need to be configured as described above. If the liquid manure producer has access to sufficiently large field areas, and his own equipment for handling the sterile liquid, the second liquid manure container 22 can be made larger and the evaporation unit 5 omitted, in that the sterile liquid produced can be applied directly to the fields as fertilizing material. It is also possible to make the pre-treatment container 2 much smaller and arrange the method in such a way that the acidity of the liquid manure is always regulated solely by the addition of acid. In this and other ways it is possible to arrange the processing of the liquid manure in the most advantageous manner in each individual case. The only decisive factor is that one utilizes the stages of the method as presented in claim 1.

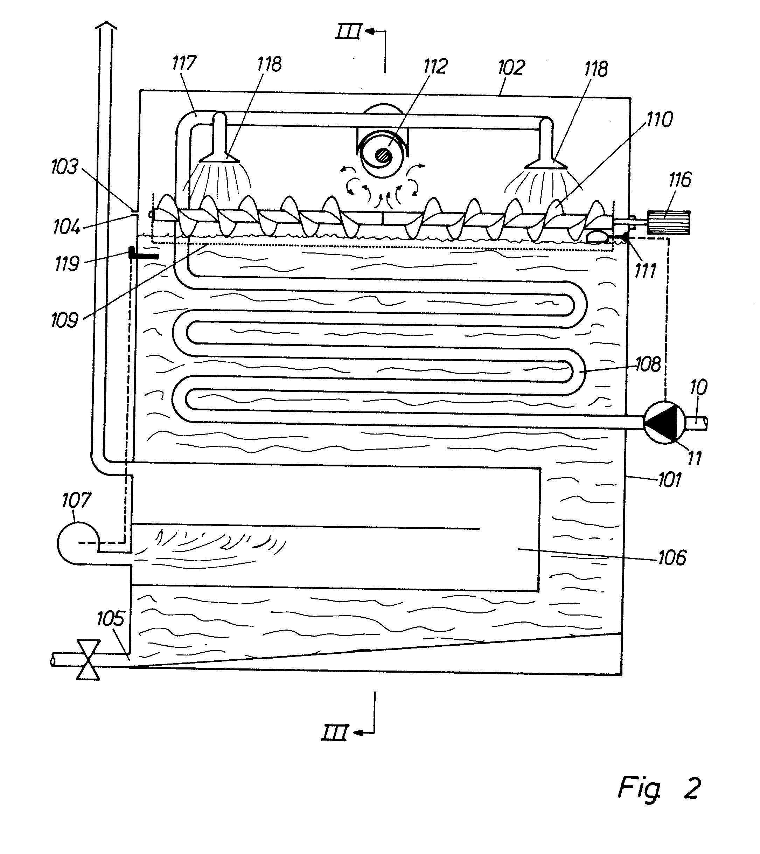

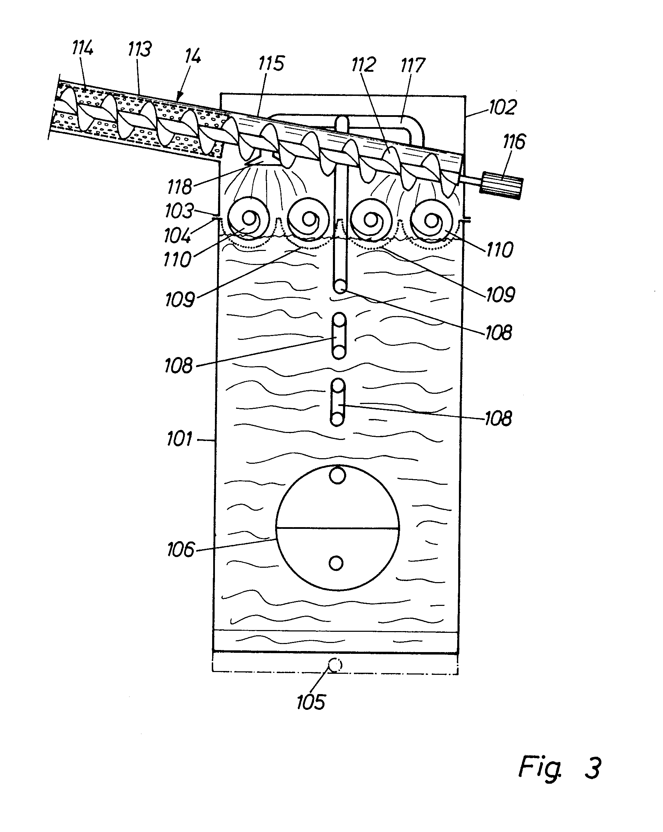

Figures 2 and 3 show a schematic arrangement of a slurry separation tank 3 which forms of the plant for the execution of the method according to the invention in a particularly advantageous manner.

The separation tank 3 has a container part 101 and a hood part 102, which with downwardly-directed flange surfaces 103 rests on upwardly-directed flange surfaces 104 on the container 101. In the vicinity of the container bottom there is mounted a heating surface 106 which can be heated by a source of heat, here illustrated as an oil-burner 107. Above the heating surface 106 there is mounted a heat exchanger 108, illustrated here as a pipe coil. The heat exchanger is an integral part of the second liquid manure pipe 10 in which the second liquid manure pump 11 is inserted. Above the heat exchanger 108, and uppermost in the container part 101, sieves 109 with an approximately semi-circular section are mounted in a substantially horizontal position. These sieves 109 extend between to opposite walls in the container part 101, and are seated in a detachable manner on bracket supports (not shown) on the walls of the container part 101. In each sieve 109 there is a conveyor worm 110 having two worm screws, one at each end, the spirals of these worm screws being in opposite directions, so that rotation of the worm screw in one direction will feed the transported material in towards the centre of the worm 110, while rotation of the worm 110 in the opposite direction will feed the transported material out towards one of the worm's ends. Each conveyor worm 110 is detachably seated in/on the container walls which support the corresponding sieve 109, in that the one end of the worm 110 is seated intern ally in the container part 101, while the second end of the worm 110 extends through the wall of the container part 110 to a slow-speed, driving gear motor, which can be common to all the conveyor worms 110 or separate for each individual worm. Between two of the sieves 109, and at a height which is adjustable around the bottom level of the sieves 109, a float is provided for the float switch 111. This float and corresponding float arm are covered above by a plate (not shown) which can be a part of an adjacent sieve 109. Out of regard for service, the float switch 111 is mounted in a supported manner in the hood part 102. The float switch 111 controls the second liquid manure pump 11 in such a way that a fall in the level of the liquid in the tank 3 results in the pump being switched on, and is switched off again by the float switch 111 when the level of the liquid in the tank 3 has risen to the desired level. Above the sieves 109 and the conveyor worms 110, a dry-stuff removal element 14 is provided, this extending transversely in relation to the worms 110 and being inclined upwards in the direction of transport, and which is formed as a conveyor worm 112. In its material intake area uppermost in the hood part 102, this worm is surrounded by a substantially semi-cylindrical shroud 115 which, at the outlet from the hood part 102, goes over to form a cylindrical worm conveyor shroud 113 in which is mounted a sieve tube 114. This sieve tube 114 surrounds the conveyor worm 112 and has an outside diameter which is somewhat smaller than the inside diameter of the worm shroud 113. The not-shown end of the conveyor worm 112 is mounted in a freely-rotatable manner, and at the end turning towards the hood part 102, its axle is seated in this part and extends through the wall of the hood to an externally-mounted, slow-speed gear motor 116, which drives the conveyor worm 112. From the heating surface 108, a pipe 117 leads up into the upper part of the hood part 102 and branches out to a number of liquid manure spreading elements 118, illustrated here as sprinklers but which are in themselves components of a known kind, which can distribute the slurry-like liquid manure material evenly over the surface of the contents of the tank 3. Finally, in the container part 101, at a short distance under the sieves 109, there is mounted a thermostat sensor 119 which is temperature adjustable and which controls the supply of heat from the heat source 107 to the heating surface 106.

The separation tank 3 functions in the following manner:

The second liquid manure pump 11 starts and pumps pre-treated liquid manure into the separation tank 3 via the spreading elements 118, which spread the liquid manure over the sieves 109. The manure's liquid phase seeps down through the sieves 109, in that solids with a sufficient particle size are retained by the sieves. The conveyor worms 110 and 112 are started and the tank 3 is filled. When the level of the liquid manure reaches above the heating surface 106, the heat source 107 can be activated so that the heating of the liquid manure is started. When the level in the container part 101 has risen to the level of the adjustable float switch 111, the float switch 111 controls the pump 11 so that this level is maintained during the further operation. By heating the pre-treated liquid manure up to 75°C or more, the manure material is sterilized, but at the same time a reaction takes place which results in the liquid manure material separating to form an almost clear liquid phase, which seeks towards the bottom area of the tank 3, and a dry-stuff-containing phase which seeks to move upwards and is partly pressed through the sieves 109. At the same time, the heating of the liquid phase in the container part 101 means that the supplied liquid manure material is heated via the heat exchanger 108 in such a way that it is spread out in a hot and almost completely phase-separated condition. During operation after the normal working temperature has been reached, the situation is therefore that the filtration by the sieves 109 becomes very fine for reasons of the upwardly-rising, fine-grained dry-stuff part, and efficient because the sprayed-in liquid manure is phase separated as a result of being pre-heated in the heat exchanger 108. The dry-stuff removal elements, in the form of the worm conveyors 110 and 112, remove the separated dry-stuff phase from the sieves 109, in that the worms 110 feed this material into a heap under the conveyor worm 112 transversely in the hood part 102. This heap of dry-stuff is removed by the conveyor worm 112, in that in its upwardly-inclined transport it is slightly compressed and thus drained of any accompanying liquid phase, which seeps out through the sieve tube 114 and runs back through the shroud 113 to the tank 3. The separated manure liquid phase is removed at a constantly-set speed by the third liquid manure pump 17 via the third liquid manure pipe 116, which is connected to the container opening 105.

The above description of the apparatus according to the invention serves only to illustrate an advantageous example of an embodiment. The method according to the invention can be executed by means of other variants. For example, it is not necessary for the dry-stuff removal elements to drain the liquid phase from the material removed, in that this draining can be effected outside the separation tank; the slurry fed to the separation tank 3 can be added without preheating, or the heating can be effected with means other than those shown, and the supply does not necessarily have to be effected by spreading of the liquid manure material in the manner shown. It is merely the inventor's experience from experiments that this method is expedient in connection with the shown form of dry-stuff phase removal elements. The level and temperature control can be carried out in another way, and the heating can, for example, be effected with a hot-water plant or a steam boiler as heat source. These and other modifications which may be found to be practical by those familiar with the art, all lie within the framework and scope of the invention as defined in the patent claims.

**Claims**

1. Method for the processing of liquid manure and the like, mainly in organic slurry materials, for the recovery of material with such a high content of dry-stuff that liquid does not seep from this material when it is stored in a heap under cover, and a liquid phase which is sterile, **characterized** in that the degree of acidity of the slurry material is adjusted so that when heated to around 100°C , the material does not give off ammonia in vapour form in amounts which are environmentally unacceptable, in that the slurry-like material is heated to at least 75°C, so that it is made sterile and is separated into a clear liquid phase and a relatively liquid-free slurry layer, and in that the two slurry phases are then separated in such a manner that they can be handled individually.

2. Method according to claim 1, **characterized** in that the acidity of the slurry is regulated by biological treatment with an acid-producing, microbiological culture.

3. Method according to claim 1 or 2, **characterized** in that the acidity of the slurry to be processed is adjusted to 7 >; pH >; 3, preferably to pH = approx. 6.

4. Method according to claim 1, 2 or 3, **characterized** in that the slurry is heated to 75 - 100°C, and preferably to approx. 90°C.

5. Method according to one of the claims 1 - 4, **characterized** in that the dry-stuff part of the slurry is continuously removed from the processing point, and during removal it is handled mechanically and compressed slightly so that the liquid phase is hereby drained away and led back to the processing point.

6. Apparatus for the execution of the method according to one of the claims 1 - 5, **characterized** in that it comprises a slurry separation tank (3) with one or more supply openings (118) for slurry in the upper area of the tank (3), a slurry level control element (111) for maintaining a mainly constant level of slurry in the tank (3), a liquid removal opening (105) in the bottom area of the tank (3), a heating surface (106) in the tank (3) installed below the normal surface level of the slurry, and removal elements (13,14; 110, 112) for the collection of the dry-stuff phase of the slurry from the slurry surface area.

7. Apparatus according to claim 6, **characterized** in that it comprises a pre-treatment container (2) which is arranged in a known manner to treat the slurry with an acid-forming, biological microculture, and that the pre-treatment container (2) is provided with a slurry removal opening from which a slurry pipe (10) or slurry conveyor leads to the slurry separation tank (3).

8. Apparatus according to claim 6 or 7, **characterized** in that the removal element (13, 14) in the slurry separation tank (3) is arranged for the removal of the dry-stuff phase under light compression of same, the draining off of the slurry liquid phase and the returning of the drained-off slurry liquid phase to the slurry separation tank (3), in that the removal element (13, 14) preferably comprises one or more parallel worm conveyors (110), which are disposed individually in elongated sieves (109) mounted in a substantially horizontal manner, the bottoms of which are disposed in the vicinity of the surface of the slurry which is determined by the level control element (111), and a worm conveyor (112) having an intake opening positioned in that area of the slurry separation tank (3) to which the horizontal worm conveyors (110) carry the slurry dry-stuff phase, and which from the intake opening extends upwards in an inclined manner into a double tube, the inner tube element (114) of which is provided with drain holes.

9. Apparatus according to the claims 6 - 8, **characterized** in that the supply opening(s) to the slurry separation tank (3) are provided in one or more slurry ejection elements (118), which are arranged to spread the supplied slurry in a substantially even manner over the open slurry surface in the slurry separation tank (3).

10. Apparatus according to one of the claims 6 - 9, **characterized** in that it includes a slurry supply pipe (10) which, with a heat exchanger surface (108) disposed in the slurry separation tank (3) below the surface level determined by the slurry level control element (111), leads the slurry forward to the supply opening or supply openings (118), in that the heat exchanger surface (108) is prefer ably dimensioned to heat the supplied slurry to at least approx. 60° C, and advantageously to at least 75° C.

11. Apparatus according to one of the claims 6-10, **characterized** in that it comprises a liquid evaporation part (5) which is connected to the liquid removal opening of the slurry separation tank (3), and which is arranged to evaporate the slurry liquid phase to a residue with such a high content of dry matter that this residue can be added to the slurry dry-stuff phase and further processed together with same, in that the evaporation boiler (5) comprises a heating surface in the upper part of the boiler's liquid volume, and a steam dome from which steam is led to a condenser below the heating surface.

0286616

Fig. 1

0286616

Fig. 2

0286616

Fig. 3